# EUROPÄISCHE PATENTSCHRIFT

(11) **EP 4 412 888 B1**
(45) Veröffentlichungstag und Bekanntmachung des Hinweises auf die Patenterteilung: **25.06.2025**
(21) Anmeldenummer: 22762059.8
(22) Anmeldetag: 09.08.2022
(51) Int. Cl.: B62D 21/15, B62D 25/08, B62D 27/06

(54) **ANORDNUNG ZUR LASTVERTEILUNG IN EINEM FAHRZEUG**
ASSEMBLY FOR LOAD DISTRIBUTION IN A VEHICLE
ENSEMBLE DE RÉPARTITION DE CHARGE DANS UN VÉHICULE

(30) Priorität: 05.10.2021 DE 102021125737
(43) Veröffentlichungstag der Anmeldung: 14.08.2024
(73) Patentinhaber: Audi AG, 85045 Ingolstadt (DE)
(72) Erfinder: LIESERT, Kim Anne, 85057 Ingolstadt (DE); HOEVEKAMP, Tanja, 74321 Bietigheim-Bissingen (DE)
(86) Internationale Anmeldenummer: PCT/EP2022/072324
(87) Internationale Veröffentlichungsnummer: WO 2023/057116

(56) Entgegenhaltungen:
- EP-A1- 3 424 803
- GB-A- 2 109 433
- JP-A- 2007 269 123
- US-A- 2 883 232

## Beschreibung

Die Erfindung betrifft eine Anordnung zur Lastverteilung in einem Fahrzeug. Des Weiteren betrifft die Erfindung ein Fahrzeug mit einer solchen Anordnung zur Lastverteilung.

Anordnungen zur Lastverteilung in einem Fahrzeug, insbesondere in einem Vorderbau des Fahrzeugs, sind in zahlreichen Variationen bekannt. Damit ein Längsträger des Fahrzeugvorderbaus bei einem Aufprall auf ein deformierbares Hindernis Energie abbaut, auch wenn er nicht direkt im Auftreffbereich liegt, wie beispielsweise bei einem seitlich versetzten Aufprall mit einem deformierbaren Hindernis oder bei einem Frontpfahlaufprall, sollte der Längsträger mit den beaufschlagten Bauteilen verbunden sein und bleiben. Dadurch kann die Belastung auf mehr Bauteile verteilt und die Belastung auf die beaufschlagten Bauteile verringert werden. Da der Längsträger bei einem solchen Aufprall nicht direkt getroffen wird, bleibt dieser zunächst unverformt. Da der Längsträger zunächst nicht verformt wird, erhöht sich die Zugbelastung auf die Verbindung zwischen dem undeformierten Längsträger und den durch den Aufprall beaufschlagten Bauteilen. Dadurch kann die herkömmliche Verbindungstechnik versagen, so dass der Bauteileverbund nicht zusammengehalten werden kann.

Aus der DE 10 2012 022 876 A1 ist ein Verstärkungselement zur Verstärkung eines aus Längs- und Seitenflächen gebildeten Hohlprofils bekannt. Das Verstärkungselement weist einen Bolzenabschnitt und einen Kopfabschnitt auf. Hierbei ist vorgesehen, dass der Bolzenabschnitt wenigstens ein Paar von axial versetzten und hinsichtlich des Bolzenabschnittes gegenüberliegenden, abstehenden Armabschnitten aufweist, die endseitig jeweils eine Anlagefläche aufweisen, und der Bolzenabschnitt mit den Armabschnitten ausgebildet ist zum Einführen in das Hohlprofilinnere über eine auf einer Seitenfläche des Hohlprofils angeordnete Einführöffnung, derart dass bei Anliegen des Kopfabschnittes auf dieser Seitenfläche durch eine Drehbewegung in eine Montageposition die endseitigen Anlageflächen der Armabschnitte in Anlage mit den Innenflächen der Längsflächen des Hohlprofils bringbar sind. Zudem wird ein Hohlprofil mit einem solchen Verstärkungselement offenbart.

Aus der DE 10 2019 131 552 A1 ist ein Kraftfahrzeug bekannt, welches eine Karosserie mit zwei Längsträgern, an deren in Fahrtrichtung gesehenen vorderem Enden jeweils eine Prallplatte aufgesetzt ist, und einem Querträger umfasst, welcher an den Prallplatten befestigt ist. Hierbei ist an den Prallplatten ein die Prallplatten verbindender Hilfsrahmen befestigt.

Aus der JP 2007 269123 A ist ein Befestigungsflansch aus einem flachen Basisabschnitt und einem extrudierten Material mit einer Pi-Form bekannt, das ein Paar Stützabschnitte ausbildet, die sich in einer vertikalen Richtung in Bezug auf den Basisabschnitt erstrecken. Der Basisabschnitt des Befestigungselements ist mit einer Seitenfläche eines Seitenrahmens verbunden, der eine Hohlstruktur mit geschlossener Querschnittsstruktur aufweist. Ein Endabschnitt eines als Hohlstruktur mit geschlossener Querschnittsstruktur ausgeführten Querträgers ist zwischen das Paar Stützabschnitte geklemmt. Der Querträger und die Stützabschnitte werden an einem Schweißabschnitt verschweißt, wodurch der Seitenrahmen und der Querträger durch das Befestigungselement befestigt werden.

Aus der US 2,883,232 A und der GB 2 109 433 A sind Hülsenausführungen bekannt, welche zwei einander gegenüberliegende Öffnungen durchgreifen und durch Absätze und/oder Keilelemente Formschluss und Anlage an den Wänden der Öffnungen erreichen.

Aus der EP 3 424 803 A1 ist eine Anordnung zur Lastverteilung in einem Fahrzeug, mit einem als Hohlprofil ausgeführten Längsträger und einem Querträger, welcher mindestens einen Befestigungsflansch aufweist. Der mindestens eine Befestigungsflansch des Querträgers verläuft zumindest abschnittsweise parallel zum Längsträger und ist mit einer Schraube verbunden, welche so in den Längsträger eingeführt und formschlüssig mit dem Längsträger verbunden ist, dass die Schraube parallel zum Querträger 54 verläuft und wirkende Zugbelastungen in den Längsträger einleitet.

Der Erfindung liegt die Aufgabe zu Grunde, eine Anordnung zur Lastverteilung in einem Fahrzeug sowie ein Fahrzeug mit einer solchen Anordnung bereitzustellen, welche im Crashfall den Zusammenhalt einer Verbindungstechnik zwischen einem als Hohlprofil ausgeführten Längsträger und einem Querträger verbessert.

Diese Aufgabe wird durch eine Anordnung zur Lastverteilung in einem Fahrzeug mit den Merkmalen des Patentanspruchs 1 und durch ein Fahrzeug mit den Merkmalen des Patentanspruchs 6gelöst. Vorteilhafte Ausgestaltungen mit zweckmäßigen Weiterbildungen der Erfindung sind in den abhängigen Patentansprüchen angegeben.

Um eine Anordnung zur Lastverteilung in einem Fahrzeug bereitzustellen, welche im Crashfall den Zusammenhalt einer Verbindungstechnik zwischen einem als Hohlprofil ausgeführten Längsträger und einem Querträger verbessert, weist der Querträger mindestens einen Befestigungsflansch auf, welcher zumindest abschnittsweise parallel zum Längsträger verläuft. Zudem ist eine Befestigungshülse vorgesehen, mit welcher der Befestigungsflansch verbunden ist. Hierbei ist die Befestigungshülse so in den Längsträger eingeführt und formschlüssig mit dem Längsträger verbunden, dass die Befestigungshülse parallel zum Querträger verläuft und wirkende Zugbelastungen in den Längsträger einleitet. Der mindestens eine Befestigungsflansch umfasst eine Befestigungslasche. Die Befestigungslasche ist an einem Ende mit der Befestigungshülse verschraubt. Dadurch kann der Formschluss zwischen der Befestigungshülse und dem Längsträger verstärkt werden. Am anderen Ende kann die Befestigungslasche vorzugsweise mit dem Querträger verschweißt sein.

Zudem wird ein Fahrzeug mit einem als Hohlprofil ausgeführten Längsträger und einem Querträger vorgeschlagen, welche über eine solche Anordnung zur Lastverteilung miteinander verbunden sind.

Unter einer Anordnung zur Lastverteilung in einem Fahrzeug wird nachfolgend eine Anordnung mit einem Längsträger und einem mit dem Längsträger verbundenen Querträger verstanden, bei welcher die Verbindungstechnik zwischen dem Querträger und dem Längsträger dadurch entlastet wird, dass die Befestigungshülse in den Längsträger eingebracht ist und die bei einem Frontaufprall beaufschlagten Bauteile zusätzlich mit der Befestigungshülse verbunden sind. Damit nicht die gesamte Energie über diese Verbindung abgebaut werden muss, ist die Befestigungshülse in Zugrichtung in den Längsträger eingesteckt und mit diesem formschlüssig verbunden. Über den Formschluss wird die Energie für einen optimalen Energieabbau auf die Wände des Längsträgers verteilt.

In vorteilhafter Ausgestaltung der Anordnung kann die Befestigungshülse eine erste Öffnung in einer Innenwand des Längsträgers und eine zweite Öffnung in einer Außenwand des Längsträgers durchgreifen. Hierzu kann die Befestigungshülse an einem Ende einen Auflageteller aufweisen, welcher am Rand der ersten Öffnung aufliegt und einen ersten Formschluss mit der Innenwand des Längsträgers ausbilden kann. Durch den ersten Formschluss kann die Zugbelastung im Crashfall auf die Innenwand des Längsträgers verteilt werden. Hierbei ist die Innenwand an einer dem Fahrzeuginnenraum zugewandten Seite des Längsträgers ausgebildet. Zudem kann die Befestigungshülse am anderen Ende einen Absatz aufweisen, welcher am Rand der zweiten Öffnung aufliegt und einen zweiten Formschluss mit der Außenwand des Längsträgers ausbilden kann. Durch den zweiten Formschluss kann die Zugbelastung im Crashfall zusätzlich auf die Außenwand des Längsträgers verteilt werden. Hierbei ist die Außenwand an einer vom Fahrzeuginnenraum abgewandten Seite des Längsträgers ausgebildet. Da die Befestigungshülse in Zugrichtung in den Längsträger eingesteckt ist, wird die Befestigungshülse zuerst in die erste Öffnung der Innenwand und dann in die zweite Öffnung der Außenwand eingeführt. Dies ermöglicht einen sicheren Formschluss zwischen der Befestigungshülse und dem Längsträger.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen. Hierbei zeigen:
- Fig. 1: eine schematische und ausschnittsweise Darstellung eines erfindungsgemäßen Fahrzeugs mit einem Ausführungsbeispiel einer erfindungsgemäßen Anordnung zur Lastverteilung in einem Fahrzeug; und
- Fig. 2: eine Detaildarstellung II aus Fig. 1.

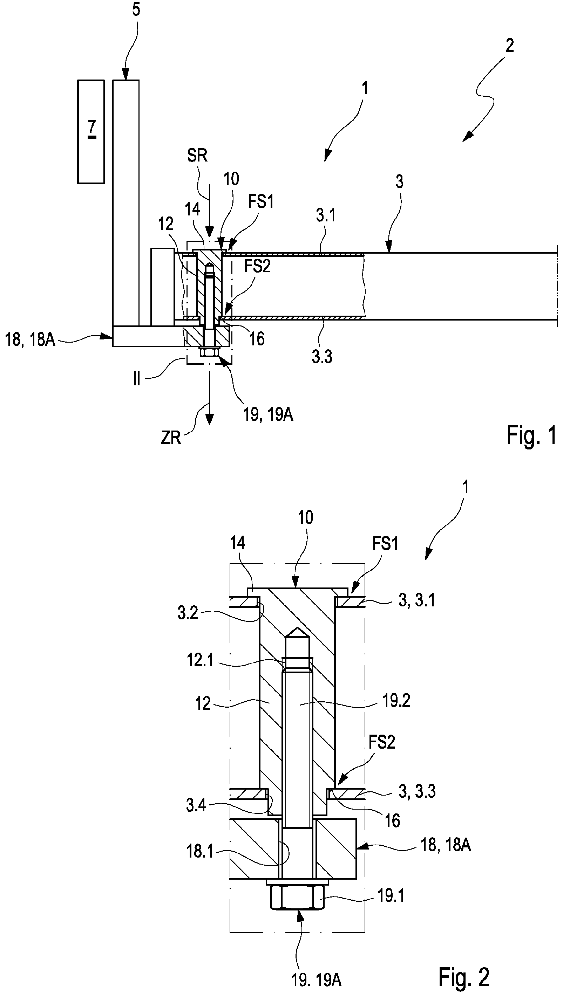

Wie aus Fig. 1 und 2 ersichtlich ist, weist das dargestellte Ausführungsbeispiel eines erfindungsgemäßen Fahrzeugs 2 im dargestellten Ausschnitt einen als Hohlprofil ausgeführten Längsträger 3 und einen Querträger 5 auf, welche über eine erfindungsgemäße Anordnung 1 zur Lastverteilung miteinander verbunden sind.

Wie aus Fig. 1 und 2 weiter ersichtlich ist, umfasst das dargestellte Ausführungsbeispiel der erfindungsgemäßen Anordnung 1 zur Lastverteilung in einem Fahrzeug 2, den als Hohlprofil ausgeführten Längsträger 3, eine Befestigungshülse 10 und den Querträger 5, welcher mindestens einen Befestigungsflansch 18 aufweist. Der mindestens eine Befestigungsflansch 18 des Querträgers 5 verläuft zumindest abschnittsweise parallel zum Längsträger 3 und ist mit der Befestigungshülse 10 verbunden. Hierbei ist die Befestigungshülse 10 so in den Längsträger 3 eingeführt und formschlüssig mit dem Längsträger 3 verbunden, dass die Befestigungshülse 10 parallel zum Querträger 5 verläuft und wirkende Zugbelastungen in den Längsträger 3 einleitet.

Wie aus Fig. 1 und 2 weiter ersichtlich ist, durchgreift die Befestigungshülse 10 eine erste Öffnung 3.2 in einer Innenwand 3.1 des Längsträgers 3 und eine zweite Öffnung 3.4 in einer Außenwand 3.3 des Längsträgers 3. Die Befestigungshülse 10 wird in Steckrichtung SR in den Längsträger 3 eingesteckt, wobei die Befestigungshülse 10 zuerst in die erste Öffnung 3.2 der Innenwand 3.1 und dann in die zweite Öffnung 3.4 der Außenwand 3.3 eingeführt wird. Die Befestigungshülse 10 umfasst einen Grundkörper 12, welcher an einem Ende einen Auflageteller 14 und am anderen Ende einen Absatz 16 aufweist. Im dargestellten vollständig eingesteckten Zustand liegt der Auflageteller 14 am Rand der ersten Öffnung 3.2 auf und bildet einen ersten Formschluss FS1 mit der Innenwand 3.1 des Längsträgers 3 aus. Der Absatz 16 der Befestigungshülse 10 liegt am Rand der zweiten Öffnung 3.4 auf und bildet einen zweiten Formschluss FS2 mit der Außenwand 3.2 des Längsträgers 3 aus.

Wie aus Fig. 1 und 2 weiter ersichtlich ist, umfasst der mindestens eine Befestigungsflansch 18 eine Befestigungslasche 18A, welche an einem Ende über geeignete Befestigungsmittel 19 mit der Befestigungshülse 10 verbunden ist. Im dargestellten Ausführungsbeispiel weist der Grundkörper 12 der Befestigungshülse 10 ein Innengewinde 12.1 auf und das Befestigungsmittel 19 ist als Schraube 19A ausgeführt. Daher ist die Befestigungslasche 18A im dargestellten Ausführungsbeispiel mit der Befestigungshülse 10 verschraubt. Hierzu ist ein Gewindeschaft 19.2 der Schraube 19A durch eine Öffnung 18.1 in der Befestigungslasche 18A geführt und in das Innengewinde 12.1 der Befestigungshülse 10 eingeschraubt, bis ein Schraubenkopf 19.1 mit einem vorgebbaren Drehmoment auf einem Rand der Öffnung 18.1 aufliegt. Am anderen Ende ist die Befestigungslasche 18A im dargestellten Ausführungsbeispiel mit dem Querträger 5 verschweißt. Selbstverständlich können auch andere geeignete Verbindungstechniken eingesetzt werden, um die Befestigungslasche 18A mit dem Querträger 5 zu verbinden.

Wie aus Fig. 1 weiter ersichtlich ist, ist der Längsträger 3 bei einem Frontalaufprall auf ein dargestelltes defomierbares Hindernis 7 nicht direkt getroffen und bleibt zunächst unverformt. Der Aufprall des Querträgers 5 auf das Hindernis bewirkt jedoch über die Befestigungslasche 18A und die Schraube 19A eine Zugbelastung der Befestigungshülse 10 in Zugrichtung ZR, welcher der Steckrichtung SR der Befestigungshülse 10 entspricht. Hierbei wird die Zugbelastung über den ersten Formschluss FS1 in die Innenwand 3.1 des Längsträgers 3 eingeleitet und verteilt, und über den zweiten Formschluss FS2 in die Außenwand 3.2 des Längsträgers 3 eingeleitet und verteilt. Durch die formschlüssig in den Längsträger 3 eingebrachte Befestigungshülse 10 sind die durch den Aufprall beaufschlagten Bauteile zusätzlich mit dem Längsträger 3 verschraubt. Dadurch wird die Belastung auf mehr Bauteile verteilt und verringert die Belastung auf die beaufschlagten Bauteile. Über den Formschluss wird die Aufprallenergie für einen optimalen Energieabbau auf die Innenwand 3.1 und die Außenwand 3.2 verteilt, wobei der Längsträger 3 zum Energieabbau verformt bzw. deformiert werden kann.

### BEZUGSZEICHENLISTE

- 1: Anordnung zur Lastverteilung
- 2: Fahrzeug
- 3: Längsträger
- 3.1: Innenwand
- 3.2: erste Öffnung
- 3.3: Außenwand
- 3.4: zweite Öffnung
- 5: Querträger
- 7: Hindernis
- 10: Befestigungshülse
- 12: Grundkörper
- 12.1: Innengewinde
- 14: Auflageteller
- 16: Absatz
- 18: Befestigungsflansch
- 18A: Befestigungslasche
- 18.1: Öffnung
- 19: Befestigungsmittel
- 19A: Schraube
- 19.1: Schraubenkopf
- 19.2: Gewindeschaft
- SR: Steckrichtung
- ZR: Zugrichtung
- FS1: erster Formschluss
- FS2: zweiter Formschluss

## Patentansprüche

1. Anordnung (1) zur Lastverteilung in einem Fahrzeug (2), mit einem als Hohlprofil ausgeführten Längsträger (3), einer Befestigungshülse (10) und einem Querträger (5), welcher mindestens einen Befestigungsflansch (18) aufweist, wobei der mindestens eine Befestigungsflansch (18) des Querträgers (5) zumindest abschnittsweise parallel zum Längsträger (3) verläuft und mit der Befestigungshülse (10) verbunden ist, wobei die Befestigungshülse (10) so in den Längsträger (3) eingeführt und formschlüssig mit dem Längsträger (3) verbunden ist, dass die Befestigungshülse (10) parallel zum Querträger (5) verläuft und wirkende Zugbelastungen in den Längsträger (3) einleitet, wobei der mindestens eine Befestigungsflansch (18) eine Befestigungslasche (18A) umfasst, welche an einem Ende mit der Befestigungshülse (10) verschraubt ist.

2. Anordnung (1) nach Anspruch 1,
**dadurch gekennzeichnet,**
**dass** die Befestigungshülse (10) eine erste Öffnung (3.2) in einer Innenwand (3.1) des Längsträgers (3) und eine zweite Öffnung (3.4) in einer Außenwand (3.3) des Längsträgers (3) durchgreift.

3. Anordnung (1) nach Anspruch 2,
**dadurch gekennzeichnet,**
**dass** die Befestigungshülse (10) an einem Ende einen Auflageteller (14) aufweist, welcher am Rand der ersten Öffnung (3.2) aufliegt und einen ersten Formschluss (FS1) mit der Innenwand (3.1) des Längsträgers (3) ausbildet.

4. Anordnung (1) nach Anspruch 2 oder 3,
**dadurch gekennzeichnet,**
**dass** die Befestigungshülse (10) am anderen Ende einen Absatz (16) aufweist, welcher am Rand der zweiten Öffnung (3.4) aufliegt und einen zweiten Formschluss (FS2) mit der Außenwand (3.2) des Längsträgers (3) ausbildet.

5. Anordnung (1) nach einem der Ansprüche 1 bis 4,
**dadurch gekennzeichnet,**
**dass** die Befestigungslasche (18A) am anderen Ende mit dem Querträger (5) verschweißt ist.

6. Fahrzeug (2) mit einem als Hohlprofil ausgeführten Längsträger (3) und einem Querträger (5), welche über eine Anordnung (1) zur Lastverteilung nach einem der Ansprüche 1 bis 5 miteinander verbunden sind.

## Claims

1. Assembly (1) for load distribution in a vehicle (2), having a longitudinal member (3) in the form of a hollow profiled element, a fastening sleeve (10) and a cross-member (5), which has at least one fastening flange (18), wherein at least portions of the at least one fastening flange (18) of the cross-member (5) run parallel to the longitudinal member (3), and the at least one fastening flange of the cross-member is connected to the fastening sleeve (10), wherein the fastening sleeve (10) is inserted into the longitudinal member (3) in such a way and form-fittingly connected to the longitudinal member (3) in such a way that the fastening sleeve (10) runs parallel to the cross-member (5) and introduces acting tensile loads into the longitudinal member (3), wherein the at least one fastening flange (18) has a fastening tab (18A) which is screwed to the fastening sleeve (10) at one end.

2. Assembly (1) according to claim 1,
**characterized in that**
the fastening sleeve (10) passes through a first opening (3.2) in an inner wall (3.1) of the longitudinal member (3) and a second opening (3.4) in an outer wall (3.3) of the longitudinal member (3).

3. Assembly (1) according to claim 2,
**characterized in that**
the fastening sleeve (10) has a support plate (14) at one end, which support plate rests on the edge of the first opening (3.2) and forms a first form fit (FS1) with the inner wall (3.1) of the longitudinal member (3).

4. Assembly (1) according to claim 2 or 3,
**characterized in that**
the fastening sleeve (10) has a shoulder (16) at the other end, which shoulder rests on the edge of the second opening (3.4) and forms a second form fit (FS2) with the outer wall (3.2) of the longitudinal member (3).

5. Assembly (1) according to any one of claims 1 to 4,
**characterized in that**
the fastening tab (18A) is welded to the cross-member (5) at the other end.

6. Vehicle (2) having a longitudinal member (3) in the form of a hollow profiled element and a cross-member (5), which are connected to one another via an assembly (1) for load distribution according to any one of claims 1 to 5.

## Revendications

1. Ensemble (1) pour la répartition de charge dans un véhicule (2), avec un longeron (3) formé comme profilé creux, une douille de fixation (10) et une traverse (5) qui présente au moins une bride de fixation (18), dans lequel la au moins une bride de fixation (18) de la traverse (5) s'étend au moins par sections parallèlement au longeron (3) et est reliée à la douille de fixation (10), dans lequel la douille de fixation (10) est introduite dans le longeron (3) et reliée par complémentarité de formes au longeron (3) de sorte que la douille de fixation (10) s'étende parallèlement à la traverse (5) et initie des efforts de traction agissant dans le longeron (3), dans lequel la au moins une bride de fixation (18) comprend une languette de fixation (18A) qui est vissée à la douille de fixation (10) à une extrémité.

2. Ensemble (1) selon la revendication 1,
**caractérisé en ce que**
la douille de fixation (10) traverse une première ouverture (3.2) dans une paroi intérieure (3.1) du longeron (3) et une seconde ouverture (3.4) dans une paroi extérieure (3.3) du longeron (3).

3. Ensemble (1) selon la revendication 2,
**caractérisé en ce que**
la douille de fixation (10) présente à une extrémité une plaque d'appui (14) qui repose au niveau du bord de la première ouverture (3.2) et forme une première liaison à complémentarité de formes (FS1) avec la paroi intérieure (3.1) du longeron (3).

4. Ensemble (1) selon la revendication 2 ou 3,
**caractérisé en ce que**
la douille de fixation (10) présente à l'autre extrémité un épaulement (16) qui repose contre le bord de la seconde ouverture (3.4) et forme une seconde liaison à complémentarité de formes (FS2) avec la paroi extérieure (3.2) du longeron (3).

5. Ensemble (1) selon l'une quelconque des revendications 1 à 4,
**caractérisé en ce que**
la languette de fixation (18A) est soudée à l'autre extrémité à la traverse (5).

6. Véhicule (2) avec un longeron (3) formé comme profilé creux et une traverse (5) qui sont reliés par le biais d'un ensemble (1) pour la répartition de charge selon l'une quelconque des revendications 1 à 5.
